(19) Europäisches Patentamt
European Patent Office
Office européen des brevets

(11) Veröffentlichungsnummer: **0 041 209**
**A1**

(12) # EUROPÄISCHE PATENTANMELDUNG

(21) Anmeldenummer: **81103984.1**

(22) Anmeldetag: **23.05.81**

(51) Int. Cl.³: **C 08 F 222/20**
C 08 F 246/00, C 09 D 3/74

(30) Priorität: **30.05.80 DE 3020524**

(43) Veröffentlichungstag der Anmeldung:
**09.12.81 Patentblatt 81/49**

(84) Benannte Vertragsstaaten:
**AT BE CH DE FR GB IT LI NL SE**

(71) Anmelder: **HOECHST AKTIENGESELLSCHAFT**
**Postfach 80 03 20**
**D-6230 Frankfurt/Main 80(DE)**

(72) Erfinder: **Plum, Helmut, Dr.**
**Rochusstrasse 40**
**D-5132 Übach-Palenberg(DE)**

(54) **Verfahren zur Herstellung von härtbaren Copolymeren und deren Verwendung.**

(57) Verfahren zur Herstellung von härtbaren Copolymeren durch Polymerisation von ungesättigten Estern mit ungesättigten polymerisierbaren Monomeren, die keine freie COOH-Gruppe enthalten, wobei als ungesättigter Ester ein olefinisch ungesättigter OH-Gruppen enthaltender Diester verwendet wird, der durch Umsetzung eines Anhydrids einer olefinisch ungesättigten Dicarbonsäure mit einer Monoepoxydverbindung erhalten worden ist, dadurch gekennzeichnet, daß der olefinisch ungesättigte OH-Gruppen enthaltende Diester vorher in einer einzigen Stufe durch Umsetzung eines Anhydrids der olefinisch ungesättigten Dicarbonsäure, des mehrwertigen Alkohols und der Monoepoxydverbindung erhalten wird, und Verwendung der so hergestellten Copolymer als härtbare Bindemittel für Lacke und/oder Überzüge.

EP 0 041 209 A1

HOECHST AKTIENGESELLSCHAFT HOE 80/F 108 Dr.Klr

**Verfahren zur Herstellung von härtbaren Copolymeren und deren Verwendung**

Es wurde schon ein Verfahren zur Herstellung von Copolymeren durch Polymerisation von olefinisch ungesättigten OH-Gruppen enthaltenden Diestern mit ungesättigten Monomeren vorgeschlagen, die keine freie COOH-Gruppe enthalten, wobei als ungesättigter Diester ein solcher Diester mit zwei Hydroxyalkylresten verwendet wird, der in einer vorhergehenden ersten Stufe durch Umsetzen eines Anhydrids einer olefinisch ungesättigten Dicarbonsäure mit einem mehrwertigen Alkohol unter Bildung eines Halbesters mit freien OH-Gruppen und weiterem Umsetzen des Halbesters in einer zweiten Stufe mit einer Monoepoxydverbindung in Form von Glycid, eines Glycidyläthers oder Glycidylesters erhalten worden ist und wobei das so erhaltene härtbare Reaktionsprodukt isoliert oder unter Einwirkung eines Härtungsmittels gehärtet wird. Außerdem ist dort auch die Verwendung der nach dem Verfahren hergestellten Produkte als härtbare Bindemittel für Lacke und/oder Überzüge beschrieben.

Dieses Verfahren und die danach hergestellten Produkte haben sich gut bewährt. Es war jedoch erwünscht, das Verfahren noch vorteilhafter zu gestalten.

Die vorliegende Erfindung sieht nun ein Verfahren zur Herstellung von härtbaren Copolymeren durch Polymerisation von ungesättigten Estern mit ungesättigten polymerisierbaren Monomeren, die keine freie COOH-Gruppe enthalten, wobei als ungesättigter Ester ein olefinisch ungesättigter OH-Gruppen enthaltender Diester verwendet wird, der durch Umsetzung eines Anhydrids einer olefinisch ungesättigten Dicarbonsäure mit einem mehrwertigem Alkohol und mit einer Monoepoxydverbindung erhalten worden ist, das darin besteht, daß der olefinisch ungesättigte OH-Gruppen enthaltende Diester vorher in einer einzigen Stufe durch Umsetzung eines Anhydrids der olefinisch ungesättigten Dicarbonsäure, des mehrwertigen Alkohols und der Monoepoxydverbindung erhalten wird.

Nach einer besonderen Ausführungsform der Erfindung ist es möglich, daß das den OH-Gruppen aufweisenden Diester enthaltende Reaktionsprodukt ohne vorherige Isolierung des Diesters mit einem unter den Reaktionsbedingungen inerten organischen Lösungsmittel versetzt, auf die gewünschte Polymerisationstemperatur gebracht und darauf in mindestens einer weiteren Stufe mit ungesättigten polymerisierbaren Monomeren, vorzugsweise unter Zusatz von Polymerisationsinitiatoren und gegebenenfalls Kettenabbrechern copolymerisiert wird.

Durch die vorliegende Erfindung wird die Durchführung des Verfahrens wesentlich vereinfacht und neben der Arbeitsgleichzeitig eine Energieersparnis erzielt.

Als Dicarbonsäureanhydride zur Herstellung der Diester seien z. B. die der Itacon-, Citracon-, Dimethylmaleinsäure und vorzugsweise das der Maleinsäure genannt.

Als Alkohole eignen sich z. B. die weiter unten genannten.

Als Epoxydverbindungen seien z. B. genannt Alkylenoxyde, wie Äthylenoxyd, Propylenoxyd, Glycid, Glycidyläther von Phenolen, wie des Phenols, der Kresole oder des tert.

Butylphenols, Glycidylester von gesättigten Carbonsäuren, vorzugsweise jedoch Glycidylester verzweigter Fettsäuren mit der allgemeinen Formel $H_2\underset{O}{\underbrace{C-CH}}-CH_2-O-\underset{\overset{\|}{O}}{C}-R$, worin R der Rest einer in α-Stellung verzweigten Fettsäure mit 8 bis 16, vorzugsweise 10 bis 12 C-Atomen ist.

Das Molekulargewicht der Diester liegt gewöhnlich im Bereich von 250 bis 1500, vorzugsweise 400 bis 1250 und die OH-Zahl im allgemeinen im Bereich von 175 bis 550, vorzugsweise 280 bis 450.

Die Temperatur der Diesterbildung liegt im allgemeinen bei 50 bis 200, vorzugsweise 100 bis 170°C.

Die Copolymerisation der Zwischenprodukte läßt sich in einer oder mehreren, vorzugsweise in zwei Stufen durchführen, und zwar im allgemeinen bei 80 bis 220, vorzugsweise 130 bis 170, insbesondere 140 bis 160°C, wobei gegebenenfalls auf die Mitverwendung von Lösungsmitteln verzichtet werden kann. Sie kann thermisch erfolgen. Vorzugsweise arbeitet man jedoch in Gegenwart von Katalysatoren, insbesondere radikalischen Initiatoren, vor allem Peroxyden, z. B. Di-tert.-butylperoxyd, Di-benzoylperoxyd, Cumylhydroperoxyd oder Azoverbindungen, wie Azo-bis-isobutyronitril oder dergleichen. Dabei ist die Gegenwart von Lösungs- oder Verdünnungsmitteln, die vorgelegt werden können, zweckmäßig. Geeignet sind z. B. hochsiedende aliphatische und/oder aromatische Lösungsmittel mit einem Siedepunkt von 140 bis 185°C, wie Mineralöl mit einem Siedepunkt von 160 bis 180°C, Xylole, Butylacetat, Äthylenglykolacetatmonoäthyläther oder dergleichen. Gegebenenfalls kann die Copolymerisation zur Steuerung des Molekulargewichts auch in Gegenwart von Kettenabbrechern, z. B. Alkanthiolen wie n-Dodecylmercaptan durchgeführt werden.

Geeignete copolymerisierbare Monomere sind beispielsweise aromatische Vinylverbindungen, wie Styrol, α-Methylstyrol, die verschiedenen Vinyltoluole und Divinylbenzole - die zuletzt genannten jedoch im allgemeinen nur in untergeordneten Mengen -, Acrylsäure- bzw. Methacrylsäurealkylester mit 1 bis 6, vorzugsweise 1 bis 4 C-Atomen im Alkylrest, wie Methyl-, Äthyl-, n- oder iso-Propyl-, n-, sec-, iso- oder tert.-Butyl-, die verschiedenen Pentyl- und Hexylacrylate bzw. -methacrylate, Hydroxyester mit 2 bis 6 C-Atomen, wie Hydroxyäthyl- und Hydroxypropylacrylat bzw. -methacrylat, ebenfalls jeweils einzeln oder im Gemisch. Falls die Copolymerisation mit einem Monomerengemisch durchgeführt wird, enthält dieses Gemisch zweckmäßig mindestens 10 Mol-% und vorzugsweise höchstens 70 Mol-% aromatische Vinylverbindungen, vorzugsweise Styol und/oder höchstens 20, vorzugsweise höchstens 10 Gew.-%, bezogen auf das gesamte Monomerengemisch, Hydroxyalkylester.

Die Copolymerisation führt man zweckmäßig so lange durch, bis ein Umsatz von mindestens 95 %, vorzugsweise mindestens 98 % erreicht ist.

Eine bevorzugte Ausführung des erfindungsgemäßen Verfahrens sieht vor, daß ein Copolymeres aus

a) 10 bis 60 Gew.-% eines Dicarbonsäureesters, vorzugsweise auf der Basis von Maleinsäureanhydrid, Trimethylolpropan und einem Glycidylester einer verzweigten Fettsäure mit 8 bis 16, vorzugsweise 10 bis 12 C-Atomen,

b) 5 bis 50 Gew.-% eines Esters der Acryl- und/oder Methacrylsäure mit einem einwertigen Alkohol mit 1 bis 6, vorzugsweise 1 bis 4 C-Atomen,

c) 5 bis 70 Gew.-% Styrol und

d) 0 bis 20 Gew.-% eines Esters der Acryl- und/oder Methacrylsäure mit einem zweiwertigen Alkohol mit 2 bis 6, vorzugsweise 2 bis 4 C-Atomen hergestellt wird.

Geeignete mehrwertige Alkohole als Komponenten der Acryl- bzw. Methacrylsäureester sind dieselben, die auch zur Herstellung der Halbester in Betracht kommen, z. B. Diole, wie Äthylenglykol, Propandiol-1,2, Propandiol-1,3, die verschiedenen Butan-, Pentan- und Hexandiole, wie Butandiol-1,4, Hexandiol-1,6,Neopentylglykol, Diäthylenglykol, Dipropylenglykol. Es können auch Umsetzungsprodukte von Polyolen, wie Glycerin, Trimethylol-äthan und -propan, Pentaerythrit, Dipentaerythrit mit Isocyanatverbindungen oder Carbonsäuren, z. B. Pentaerythrit-diester mit Monocarbonsäuren, eingesetzt werden, solange sie zwei freie OH-Gruppen pro Molekül enthalten.

Die Säurezahl der Copolymeren kann z. B. 2 bis 20 und die OH-Zahl z. B. 50 bis 200 betragen.

Im Rahmen der Erfindung liegt auch die Härtung des Copolymerisats, für die verschiedene Härtungsmittel verwendet werden können, nämlich verkappte oder freie Polyisocyanate , Polycarbonsäuren, vorzugsweise in Form von Anhydriden, Aminharze oder Phenolharze. Als Polyisocyanate seien z. B. genannt zwei- bis vierwertige Isocyanate, wie Toluylendiisocyanat, Isophorondiisocyanat, Hexamethyl endiisocyanat, 2,4,6-Triisocyanato-toluol, 4,4',4''-Triisocyanato-triphenylmethan,

2,4,4'-Triisocyanato-diphenylmethan, 2,2',5,5'-Tetraisocyanato- diphenylmethan, ferner dreiwertige Isocyanate, die beispielsweise durch Addition von Trimethylolpropan an Toluylen-diisocyanat zugänglich sind, ein durch Umsetzung von Hexamethylendiisocyanat und Wasser herstellbares Triisocyanat oder Isocyanate mit bis zu vier freien Isocyanatgruppen, wie sie z. B. durch Umsetzung von Toluylen-diisocyanat und Hexamethylen-diisocyanat herstellbar sind, bzw. deren Verkappungsprodukte mit z. B. Acetessigsäureestern, z. B. des Methanols, Äthanols, der Propanole bzw. Butanole, oder mit ε-Caprolactam.

Als Polycarbonsäure-Härter kommen z. B. in Frage Maleinsäure, Bernsteinsäure, Adipinsäure, Phthalsäure, Trimellithsäure, Pyromellithsäure oder Anhydride dieser Säuren, ferner niedermolekulare oligomere Ester oder Polyester mit freien COOH-Gruppen. Gegebenenfalls kann auch zusätzlich ein Katalysator zugegen sein, vorzugsweise organische Metallverbindungen, wie Dibutyl-zinndilaurat, Dibutylzinnoxyd, Kobaltnaphthenat oder -octoat, oder Amine, wie Äthylendiamin und dessen Homologe, wie Diäthylentriamin, Tetraäthylenpentamin, tertiäre Amine, wie Triäthylamin, Tributylamin, Dimethylanilin, vorzugsweise jedoch Alkanolamine, wie Diäthylläthanolamin.

Statt einzelner Komponenten können in allen Fällen auch Gemische eingesetzt werden.

Die Härtung, insbesondere mit Polyisocyanaten kann bereits bei Raumtemperatur erfolgen. Bei erhöhter Temperatur lassen sich vorwiegend die anderen der oben genannten Härter einschließlich verkappten Isocyanaten einsetzen, wobei die Amin- und Phenolharze z. B. auch in Gegenwart von Säuren, wie Toluolsulfonsäure als Härter wirken

können. Im allgemeinen verläuft die Wärmehärtung innerhalb von 10 bis 30 Minuten bei 120 bis 200°C. Gerade bei der Verwendung von Isocyanaten kann der Zusatz von Katalysatoren, z. B. Metallverbindungen, wie Dibutylzinndilaurat und/oder Aminen, wie tertiäres Alkanolamin, z. B. Diäthyläthanolamin, von Interesse sein.

Das härtbare Bindemittel kann außerdem mit üblichen Pigmenten, Füll- und/oder Zusatzstoffen kombiniert werden.

Auch wenn die erfindungsgemäß erhaltenen Produkte nur einen untergeordneten oder überhaupt keinen Anteil an Hydroxyalkylestern ungesättigter Säuren aufweisen, erhält man nach ihrer Härtung mit den geeigneten Härtern gehärtete Überzüge, die den bisher bekannten Überzügen auf der Basis von Acrylatharzen, die Hydroxyalkylester enthalten, zumindest gleichwertig sind, im allgemeinen jedoch überraschenderweise bessere lacktechnische Eigenschaften aufweisen. Durch die größere Variationsmöglichkeit und Auswahl an Reaktionspartnern bei der Herstellung der Copolymeren ermöglicht die vorliegende Erfindung die Auswahl optimaler Systeme für den jeweils gewünschten Zweck. Außerdem wird die Löslichkeit der Polymeren durch den Einbau der Gruppen von ungesättigten Dicarbonsäuren, wie Maleinsäureester, in den Acrylate enthaltenden Systemen verbessert. Dadurch lassen sich Lösungsmittel enthaltende Systeme mit einem höheren Festkörpergehalt als mit den bisherigen Acrylatharzen, also umweltfreundlichere Systeme, herstellen.

Die erfindungsgemäß erhaltenen Produkte lassen sich für Anstrichmittel und/oder Überzüge für Aus- und Verkleidungen, beispielsweise auch als Korrosionsschutz für verschiedene Gegenstände, insbesondere solche, die atomosphärischen Einflüssen ausgesetzt sind, wie Bauwerke,

Fahrzeuge und deren Teile, z. B. Karosserien, für Haushaltsgeräte und elektrotechnische Einrichtungen und deren Bauteile verwenden. Sie weisen eine gute Haftung auf Unterlagen aus Kunststoff und Metallen, wie Kupfer, Messing, Zink und Eisenlegierungen auf. Außerdem zeigen sie beim Auftragen als Überzüge einen guten Verlauf. Die gehärteten Überzüge zeichnen sich durch hohen Glanz, gute Elastizität, sehr gute Wetterbeständigkeit und Farbstabilität aus. Die bei Raumtemperatur härtbaren erfindungsgemäß erhaltenen Produkte eignen sich besonders zum Beschichten von Baustoffen, vorzugsweise Fußböden, z. B. solchen auf Basis von Zement und Beton. Ferner eignen sich die erfindungsgemäß erhaltenen Produkte zur Verwendung für Klebstoffe, wobei sich ihre gute Löslichkeit und ein dadurch bedingter erhöhter Festkörpergehalt vorteilhaft bemerkbar machen.

In den nachstehenden Bespielen bedeutet jeweils % Gew.-% und T Gew.-Teile.

<u>Beispiele 1) bis 3)</u>

Maleinsäureanhydrid, Trimethylolpropan und Glycidylester einer in $\alpha$-Stellung verzweigten Fettsäure mit 10 C-Atomen werden unter Rühren auf 100°C erhitzt. Nach kurzer Zeit steigt die Innentemperatur auf 140°C, fällt jedoch nach ca. 30 Minuten wieder ab. Die Säurezahl der Reaktionsmischung ist dann 20. Man versetzt mit dem gewünschten Lösungsmittel oder Lösungsmittelgemisch (z. B. Xylol, Aromatengemische mit Siedepunkt von 165 bis 175°C, Butylacetat) und erwärmt auf die gewünschte Polymerisationstemperatur (z. B. 140°C). Bei dieser Temperatur wird zuerst eine Mischung aus Styrol, Initiator und gegebenenfalls Regler innerhalb von 3 Stunden und dann eine Mischung aus einem oder mehreren Meth-acrylsäureestern, Styrol, Initiator und Regler innerhalb von 3 Stunden gleichmäßig zugegeben. Man läßt noch 2 Stunden bei

175°C nachpolymerisieren.

Die Reaktionskomponenten und deren Anteile in sind aus nachstehender Tabelle ersichtlich.

| | 1 | 2 | 3 |
|---|---|---|---|
| Maleinsäureanhydrid | 5,3 | 4,6 | 4,0 |
| Trimethylolpropan | 7,3 | 6,3 | 5,4 |
| Glycidylester | 13,3 | 11,7 | 10,0 |
| Xylol | 20 | 20 | 20 |
| alkylaromat. Mineralöl +) | 10 | 10 | 10 |
| Butylacetat | 10 | 10 | 10 |
| Styrol | 16,1 | 16,1 | 16,1 |
| Di-tert-butylperoxyd | 0,3 | 0,3 | 0,3 |
| Dodecylmercaptan | 0,2 | 0,2 | 0,2 |
| Hydroxyäthylmethacrylat | - | 2,7 | 5,4 |
| Methylmethacrylat | 12,1 | 12,7 | 13,2 |
| Styrol | 4,9 | 4,9 | 4,9 |
| Di-tert-butylperoxyd | 0,3 | 0,3 | 0,3 |
| Dodecylmercaptan | 0,2 | 0,2 | 0,2 |
| Polymerisationstemperatur (°C) | 140 | 140 | 140 |
| Feststoffgehalt % (1 Std./125°C) | 59,6 | 60,5 | 60,5 |
| Säuremenge (mg KOH/g Festharz) | 6 | 6 | 6 |
| Hydroxylzahl (mg KOH/g Festharz) | 150 | 155 | 155 |
| Viskosität mPa.s (50%ig in Xylol) | 740 | 880 | 1080 |
| Farbzahl | 1 | 1 | 1 |

+) Siedebereich 160 bis 165°C

Herstellung von Überzugsmitteln

Aus den Lösungen der Copolymerisate werden Überzugsmittel nach folgender Zusammensetzung angefertigt:

| | 1 | 2 | 3 |
|---|---|---|---|
| Copolymerisat-Lösung | 70,80 | 69,52 | 69,52 |
| Dibutylzinndilaurat (1%ig in Xylol) | 0,23 | 0,23 | 0,23 |
| Diäthyläthanolamin | 0,38 | 0,38 | 0,38 |
| Siliconöl (1%ig in Xylol) | 1,00 | 1,00 | 1,00 |
| Umsetzungsprodukt von Hexamethylendiisocyanat und Wasser (75%ig in Äthylenglykolmonoäthylätheracetat) | 27,59 | 28,87 | 28,87 |

Die Polymer-Lösungen werden mit einem Lösungsmittelgemisch aus Xylol, einem aromatischen Kohlenwasserstoffgemisch (Siedebereich 165 bis 175°C), Butylacetat und Äthylenglykolmonoäthylätheracetat (Gewichsverhältnis 40 : 25 : 20 : 15) auf eine Viskosität (DIN 53211/20°C) von 45 s eingestellt und dann in einer Naß-Schichtdicke von 100 µm auf Glasplatten und Stahlbleche aufgezogen. Die Filme werden bei Raumtemperatur an der Luft getrocknet.

Lacktechnische Prüfung:

| | 1 | 2 | 3 |
|---|---|---|---|
| Staubtrocken min. | 21 | 18 | 20 |
| Klebfrei-trocken min | 120 | 120 | 120 |
| Pendelhärte s nach König DIN 53157 nach 24 Std. | 85 | 80 | 77 |
| Erichsentiefung DIN 53156 nach 10 Tagen | 8,8 | 8,8 | 8,5 |
| Benzinbeständigkeit min nach 10 Tagen | >30 | >30 | >30 |
| Festkörpergehalt % (1 Std./125°C) | 51,3 | 51,8 | 50,5 |

Patentansprüche

1) Verfahren zur Herstellung von härtbaren Copolymeren durch Polymerisation von ungesättigten Estern mit ungesättigten polymerisierbaren Monomeren, die keine freie COOH-Gruppe enthalten, wobei als ungesättigter Ester ein olefinisch ungesättigter OH-Gruppen enthaltender Diester verwendet wird, der durch Umsetzung eines Anhydrids einer olefinisch ungesättigten Dicarbonsäure mit einem mehrwertigen Alkohol und mit einer Monoepoxydverbindung erhalten worden ist, dadurch gekennzeichnet, daß der olefinisch ungesättigte OH-Gruppen enthaltende Diester vorher in einer einzigen Stufe durch Umsetzung eines Anhydrids der olefinisch ungesättigten Dicarbonsäure, des mehrwertigen Alkohols und der Monoepoxydverbindung erhalten wird.

2) Verfahren nach Anspruch 1, dadurch gekennzeichnet, daß das den OH-Gruppen aufweisenden Diester enthaltende Reaktionsprodukt ohne vorherige Isolierung des Diesters mit einem unter den Reaktionsbedingungen inerten organischen Lösungsmittel versetzt, auf die gewünschte Polymerisationstemperatur gebracht, darauf in mindestens einer weiteren Stufe mit ungesättigten polymerisierbaren Monomeren, vorzugsweise unter Zusatz von Polymerisationsinitiatoren und gegebenenfalls Kettenabbrechern copolymerisiert werden.

3) Verfahren nach Anspruch 1 oder 2, dadurch gekennzeichnet, daß der OH-Gruppen enthaltende Diester bei einer Temperatur von 50 bis 200, vorzugsweise 100 bis 170°C hergestellt wird.

4) Verfahren nach einem oder mehreren der Ansprüche 1 bis 3, dadurch gekennzeichnet, daß die Copolymerisation mit einem solchen Monomerengemisch durchgeführt wird, das mindestens 10 und vorzugsweise höchstens 70 Mol-% aromatische Vinylverbindungen, vorzugsweise Styrol, enthält.

5) Verfahren nach einem oder mehreren der Ansprüche 1 bis 4, dadurch gekennzeichnet, daß die Copolymerisation mindestens teilweise in Gegenwart eines radikalischen Initiators, vorzugswise eines Peroxyds, vorgenommen wird.

6) Verfahren nach einem oder mehreren der Ansprüche 1 bis 5, dadurch gekennzeichnet, daß ein Copolymeres aus
a) 10 bis 60 Gew.-% des Dicarbonsäurediesters,
b) 5 bis 50 Gew.-% eines Esters der Acryl- und/oder Methacrylsäure mit einem einwertigen Alkohol mit 1 bis 6, vorzugsweise 1 bis 4 C-Atomen,
c) 5 bis 70 Gew.-% Styrol und
d) 0 bis 20 Gew.-% eines Esters der Acryl- und/oder Methacrylsäure mit einem zweiwertigen Alkohol mit 2 bis 6, vorzugsweise 2 bis 4 C-Atomen hergestellt wird.

7) Verfahren nach einem oder mehreren der Ansprüche 1 bis 6, dadurch gekennzeichnet, daß die Copolymerisation so lange durchgeführt wird, bis ein Umsatz von mindestens 95, vorzugsweise mindestens 98 % erreicht ist.

8) Verwendung der nach dem Verfahren gemäß einem oder mehreren der Ansprüche 1 bis 7 hergestellten Copolymeren als härtbare Bindemittel für Lacke und/oder Überzüge.

9) Verwendung der Produkte nach Anspruch 8 zusammen mit Polyisocyanaten als Härtern.

10) Verwendung der Produkte nach Anspruch 8 oder 9, dadurch gekennzeichnet, daß die Härtung in Gegenwart eines Katalysators, vorzugsweise organischen Metallverbindungen und/oder Aminen, durchgeführt wird.

Europäisches Patentamt

**EUROPÄISCHER RECHERCHENBERICHT**

**0041209**

Nummer der Anmeldung

EP 81 10 3984

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | GB - A - 1 158 536 (SYNRES)<br>* Ansprüche 1,7,13 *<br>& DE - A - 1 770 073<br>--- | 1-10 |
| E/P | EP - A - 0 015 484 (HOECHST)<br>* Ansprüche 1,8 und 9 *<br>-------- | 1-10 |

KLASSIFIKATION DER ANMELDUNG (Int. Cl.³)

C 08 F 222/20
246/00
C 09 D 3/74

RECHERCHIERTE SACHGEBIETE (Int. Cl.³)

C 08 F 222/20
C 09 D 3/74

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 16.09.1981 | CAUWENBERG |

EPA form 1503.1 06.78